# EUROPEAN PATENT SPECIFICATION

(11) **EP 3 479 995 B1**
(45) Date of publication and mention of the grant of the patent: **11.08.2021**
(21) Application number: 17819651.5
(22) Date of filing: 01.05.2017
(51) Int. Cl.: B29C 49/32, B29C 49/46, B29C 49/48, B29C 49/42, B29L 31/00

(54) **CONTAINER MANUFACTURING METHOD**
VERFAHREN ZUR HERSTELLUNG VON BEHÄLTERN
PROCÉDÉ DE FABRICATION D'UN RÉCIPIENT

(30) Priority: 30.06.2016 JP 2016130796
(43) Date of publication of application: 08.05.2019
(73) Proprietor: Yoshino Kogyosho Co., Ltd., Tokyo 136-8531 (JP)
(72) Inventor: MORIKAMI Shigeki, Isehara-shi Kanagawa 259-1103 (JP); SATO Sumito, Tokyo 136-8531 (JP)
(74) Representative: Murgitroyd & Company
(86) International application number: PCT/JP2017/017173
(87) International publication number: WO 2018/003284

(56) References cited:
- WO-A1-2011/030677
- WO-A1-2016/017153
- JP-B1- S5 429 548
- US-A1- 2004 178 542

## Description

### TECHNICAL FIELD

This disclosure relates to a container manufacturing method of manufacturing a resin container, and in particular to a method of manufacturing a container of a predetermined shape by liquid blow molding a resin preform.

### BACKGROUND

Resin containers, typical examples of which are oriented polypropylene (OPP) bottles and polyethylene terephthalate (PET) bottles, are used for a variety of applications such as beverages, food products, cosmetic products or the like. Such a container is generally manufactured by manufacturing a bottomed tubular preform through injection molding or compression molding of a thermoplastic resin, heating the preform to temperatures at which stretching effect can be expressed, and molding the heated preform into a predetermined shape through blow molding using a mold for blow molding.

As blow molding of a preform, liquid blow molding in which blow molding is performed by feeding a pressurized liquid instead of a pressurized air into a preform is known. In the liquid blow molding, as a liquid used for blow molding, content liquid such as beverages, cosmetic products and pharmaceutical products to be filled in a container as an end product is used. Thus the step of filling the content liquid into a container may be omitted, and the manufacturing process and the configuration of the manufacturing device may be simplified.

As a manufacturing method of a resin container including the above described liquid blow molding, a method of blow molding a plurality of preforms simultaneously by using a batch-type mold provided with a plurality of cavities disposed in series is known (see, for example, PTL 1).

In the above described manufacturing method, a plurality of preforms disposed in series at predetermined pitches are respectively fed into mold cavities in an opened state by a transfer device or the like and are clamped. After that, a pressurized liquid is fed from a nozzle unit located on top of the mold to a preform placed in each cavity, and liquid blow molding is performed. Subsequently the mold is opened and a container after blow molding is ejected by a transfer device or the like.

Additionally the disclosures of US 2004/178542 A1 and WO 2016/017153 A1 may be helpful for understanding the present invention.

### CITATION LIST

### Patent Literature

PTL 1: JP2016032924A

### SUMMARY

### (Technical Problem)

In the above described container manufacturing method, a nozzle unit or the like configured to fill a liquid is disposed on top of a mold for blow molding. Thus, for example, before an ejection step of ejecting a mold from a container, it is difficult to perform a decoration step of inserting a label bearing characters or designs into a cavity from the top of the mold and decorating the outer surface of the container and a cap attaching step of attaching a cap to a mouth of the container from the top of the container that is held in the mold. Further, when a container after blow molding is ejected from the cavity of the mold, the ejecting direction and method are limited due to the presence of a nozzle unit or the like. Thus there is still room for improvement in terms of increase in container manufacturing efficiency.

Therefore this disclosure is to propose a resin container manufacturing method that allows, in a resin container manufacturing method by liquid blow molding using a batch-type mold, to increase the container manufacturing efficiency.

### (Solution to Problem)

The present invention refers to a container manufacturing method according to claim 1.

Advantageous embodiments may include features of depending claims.

The disclosed container manufacturing method is thus a container manufacturing method of manufacturing a resin container, the method including:
a preform feed step of feeding a preform formed into a bottomed tubular shape by a resin material into a cavity of a batch-type mold for blow molding;
a liquid blow step of filling a pressurized liquid into the preform disposed in the cavity to perform blow molding; and
an ejection step of ejecting a container after blow molding from the cavity, wherein
the method further includes a mold slide step of sliding the mold for blow molding to a slide position that is different from a position of the mold for blow molding in the liquid blow step. Further the method includes at least one of the following features:
   - a decoration step of applying a decoration to an outer surface of the container with the mold for blow molding located at the slide position,
   - a cap attaching step of attaching a cap to a mouth of the container with the mold for blow molding located at the slide position and
   - the ejection step being performed with the mold for blow molding located at the slide position.

It is to be noted that, in the disclosed container manufacturing method, preferably, the mold for blow molding has a plurality of the cavities disposed in series.

Further, in the disclosed container manufacturing method, preferably, a slide direction of the mold for blow molding in the mold slide step is orthogonal to a transfer direction of the preform in the preform feed step.

Further, in the disclosed container manufacturing method, preferably, the slide direction of the mold for blow molding in the mold slide step is orthogonal to a transfer direction of a container after blow molding in the ejection step.

Further, in the disclosed container manufacturing method, preferably, the liquid blow step is performed by alternately using two of the molds for blow molding, wherein
while one of the molds for blow molding is located at a first slide position, the other mold for blow molding performs the liquid blow step; and
while the other mold for blow molding is located at a second slide position, the one of the molds for blow molding performs the liquid blow step.

### (Advantageous Effect)

According to this disclosure, in a method of manufacturing a resin container by liquid blow molding using a batch-type mold, a manufacturing method of resin container that enables a container manufacturing efficiency to be increased can be provided.

### BRIEF DESCRIPTION OF THE DRAWINGS

In the accompanying drawings:
FIG. 1 is a schematic planar view for illustrating a container manufacturing method according to an embodiment of this disclosure;
FIG. 2 is a diagram illustrating an order of each step of the container manufacturing method according to the embodiment of this disclosure;
FIG. 3 is a diagram illustrating an order of each step of the container manufacturing method according to another embodiment of this disclosure;
FIG. 4 is a diagram illustrating an order of each step of a container manufacturing method according to still another embodiment of this disclosure;
FIG. 5 is a schematic planar view for illustrating a container manufacturing method according to yet another embodiment of this disclosure;
FIG. 6 is a diagram illustrating an order of each step of the container manufacturing method according to the embodiment in FIG. 5;
FIG. 7 is a schematic planar view for illustrating a container manufacturing method according to further embodiment of this disclosure; and
FIG. 8 is a diagram illustrating an order of each step of the container manufacturing method according to the embodiment in FIG. 7.

### DETAILED DESCRIPTION

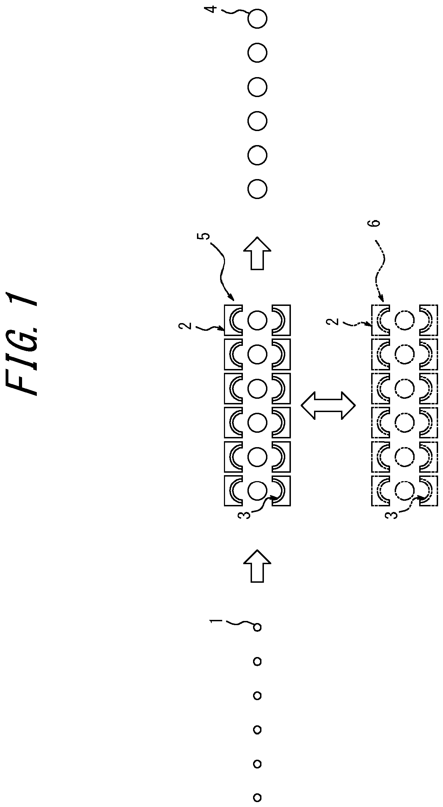

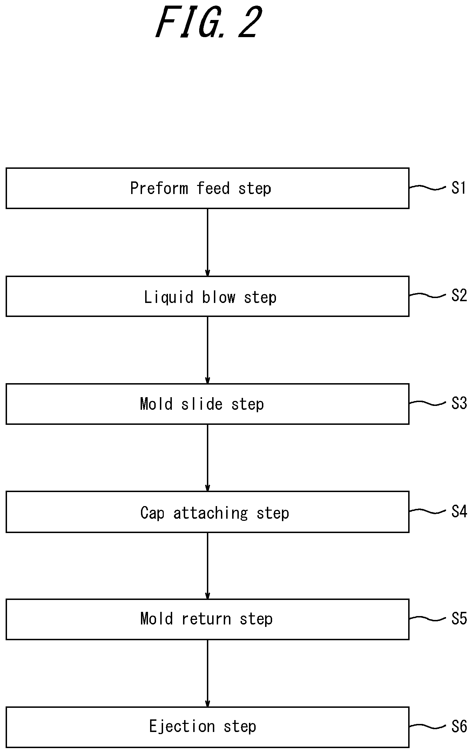

This disclosure will be illustrated in more detail below with reference to drawings. FIG. 1 is a schematic planar view for illustrating a container manufacturing method according to an embodiment of this disclosure, and FIG. 2 is a diagram illustrating an order of each step of the container manufacturing method according to the embodiment.

In FIG. 1, reference sign 1 indicates a preform, reference sign 2 indicates a mold for blow molding, reference sign 3 indicates a cavity and reference sign 4 indicates a container after blow molding. Further, in FIG. 1, a mold for blow molding 2 at a position 5 at which a liquid blow step is perform is indicated by a solid line, and the mold for blow molding 2 displaced to a slide position 6 in a mold slide step is indicated by a two-dot chain line.

Here, the disclosed container manufacturing method includes at least a preform feed step of feeding a bottomed tubular preform 1 formed in advance into a cavity 3 of a mold for blow molding 2; a liquid blow step of filling a pressurized liquid into the preform 1 disposed in the cavity 3 to perform blow molding; an ejection step of ejecting a container 4 after blow molding from the cavity 3; and a mold slide step of displacing the mold for blow molding 2 to a slide position 6. Here, the "slide position" is a position that is different at least from the position 5 of the mold for blow molding 2 in the liquid blow step. In this embodiment, it is a position obtained by sliding the mold by a predetermined distance from the position 5 of the mold for blow molding 2 in the liquid blow step in the slide direction orthogonal to the transfer direction of the preform 1 in the preform feed step. It is to be noted that, in this embodiment, this slide direction is also orthogonal to the transfer direction (ejection direction) of the container 4 in the ejection step.

In this embodiment, as illustrated in FIG. 2, the container 4 is manufactured by performing each step in order of the preform feed step S1, the liquid blow step S2, the mold slide step S3, the cap attaching step S4, the mold return step S5 and the ejection step S6. Further, after the ejection step S6, above described each step is repeated from the preform feed step S1, and the container 4 can be continuously manufactured. Each process of the container manufacturing method will be described below.

In the preform feed step S1, the resin preform 1 formed in advance is fed into the cavity 3 of the mold for blow molding 2 in an opened state. Here, as the preform 1 used by the container manufacturing method according to this embodiment, a preform that is formed into a bottomed tubular shape like a test tube by a resin material such as polypropylene (PP), polyethylene (PE) and polyethylene terephthalate (PET) can be used. Further, the preform 1 may be formed by laminating two or more types of resins. The preform 1 may be formed by injection molding using a mold for injection molding or by compression molding using a mold for compression molding, but it is not limited thereto, and the preform 1 formed by a variety of methods may be used.

The preform 1 is heated by a heating furnace or the like provided with a heater, for example, adjusted to or kept at a temperature that is suitable for liquid blow molding, in other words, a temperature at which a stretching effect is expressed, and fed to the mold for blow molding 2. It is to be noted that, right after the preform 1 is manufactured, the heat caused by heating during injection molding still remains in the preform 1. Thus, by using this, the preform 1 is fed to the mold for blow molding 2 right after being manufactured, and a heating process by a heating furnace or the like can be omitted. A preform transfer device can be used to transfer the preform 1 into the cavity 3, and the preform 1 is transferred from the heating furnace into the cavity 3, for example, through a linear path. The direction of the linear path (transfer direction) is the same as the longitudinal direction of the mold 2, in other words, the alignment direction of a plurality of cavities 3 disposed in series. The preform transfer device may be configured, for example, such that it includes a plurality of grippers (in this example, six, which is the same as the number of the cavity 3) capable of gripping a mouth of the preform 1. In this case, the preform transfer device transfers each preform 1 to its corresponding cavity 3 by gripping, for example, a mouth (neck ring, etc.) of each of six preforms 1 disposed in series by each gripper. It is to be noted that, in the preform feed step S1, the mold for blow molding 2 may be displaced to the position close to the heating furnace or to an injection molding device of the preform 1. In this case, after the preform 1 is placed in the cavity 3, the mold for blow molding 2 is displaced to the position 5 at which the liquid blow step S2 is performed, and the liquid blow step S2 is performed.

In the liquid blow step S2, a pressurized liquid is fed to each preform 1 fed into each cavity 3 and liquid blow molding is performed. Here, the mold for blow molding 2 is a batch-type mold including six cavities 3 disposed linearly in series as illustrated in FIG. 1, for example. The mold for blow molding 2 can be opened right and left (in the horizontal direction), and by opening the mold for blow molding 2, each cavity 3 is released at a time and each container 4 after blow molding can be ejected from the mold for blow molding 2. Further, preforms 1 are inserted into cavities 3 respectively with each mold for blow molding 2 opened, and subsequently each mold for blow molding 2 is clamped. Thus each preform 1 can be placed in each cavity 3. The upper surface of the mold for blow molding 2 is opened upward, and the mouth of the preform 1 is disposed in the opening.

A nozzle unit is provided on top of the mold for blow molding 2, and the nozzle unit is connected to a pressurized liquid feed machine. The pressurized liquid feed machine can feed, through the nozzle unit, a liquid pressurized to a pressure suitable for liquid blow molding to a plurality of preforms 1 disposed in each cavity 3 of the mold for blow molding 2. The pressurized liquid feed machine may be configured such that it includes a plunger pump actuated by a servo motor, for example.

The nozzle unit is vertically movable and can come in contact with the upper surface of the mold for blow molding 2. Further, the nozzle unit includes a plurality (six in this embodiment) of nozzles (not illustrated). The nozzles are fitted into the mouth of the preform 1 placed in each cavity 3 of the mold 2 when they come in contact with the upper surface of the mold for blow molding 2. Then a pressurized liquid fed from the pressurized liquid feed machine can be fed into the preform 1 through the nozzles.

It is to be noted that the nozzle unit may be configured such that it includes a stretching rod configured to axially stretch the preform 1 when liquid blow molding is performed. Further, the pressurized liquid feed machine may be configured such that it includes a liquid temperature adjusting device that circulates a liquid in the nozzle unit while maintaining the temperature of the liquid constant.

As a liquid for liquid blow molding fed into the preform 1 by the pressurized liquid feed machine, content liquids such as beverages, cosmetics and chemicals filled finally in bottles as end-products may be used, and as a result of this, a process of filling content liquid into a container after molding may be omitted. Thus the manufacturing process of the container and the structure of the container manufacturing device can be simplified.

In the mold slide step S3, the mold for blow molding 2 is slid to the above described slide position 6. In this embodiment, the mold for blow molding 2 is slid along with the container 4 that is blow molded in the liquid blow step S2. It is to be noted that, as a configuration of sliding the mold for blow molding 2, for example, a guide rail is provided on the bottom, the top or the side of the mold for blow molding 2, and along the rail the mold for blow molding 2 is displaced. The slide direction is a horizontal direction that is orthogonal to the transfer direction of the preform 1. The slide position 6 can be a position that is not overlapped with the nozzle unit and the preform transfer device. As a result of this, equipment such as a nozzle unit and a preform transfer device does not block the up and down direction of the mold for blow molding 2 at the slide position 6, which allows for easy attachment of a cap to the mouth from the top of the container 4.

In the cap attaching step S4, a cap is attached to the mouth of the container 4. In this embodiment, the cap attaching step S4 is performed at the slide position 6. Thus there is no nozzle unit or the like on top of the mold for blow molding 2, and therefore a cap can be easily attached. Further, a device for attaching a cap can be easily disposed. It is to be noted that, when the cap and the mouth are connected by screw, for example, the cap attaching step S4 is performed by turning the cap, and when the cap and the mouth are engaged in an undercut manner, the cap attaching step S4 is performed by capping or the like. Preferably, a cap is attached with the container 4 held in a mold.

In the mold return step S5, the mold for blow molding 2 is returned to the position 5 at which the liquid blow step S2 is performed. In the mold return step S5, the mold is slid in the direction opposite to that of the mold slide step S3, and a guide rail or the like may be used as with the mold slide step S3.

In the ejection step S6, the container 4 is ejected from the mold for blow molding 2. In this embodiment, the container 4 with a cap attached thereto is ejected. The container 4 disposed in the cavity 3 is transferred, along a linear path, by a transfer device provided separately from the preform transfer device. In this embodiment, the transfer direction of the container 4 is in parallel with (in line with) the transfer direction of the preform 1 in the preform feed step S1, and is orthogonal to the slide direction in the above described mold slide step S3.

It is to be noted that, the ejection step S6 may be configured such that, before the mold return step S5, the mold for blow molding 2 is opened at the slide position 6 to eject the container 4 from the cavity 3. In this case, the mold return step S5 is performed after the container 4 is ejected from the cavity 3.

As described above, in the container manufacturing method according to this embodiment, the mold for blow molding 2 is slid to the slide position 6 that is different from the position 5 of the mold in the preform feed step S1 and the liquid blow step S2, and thus the cap attaching step S4 can be easily performed at a position where the mold is not overlapped with the nozzle unit or the like. Thus, the cap attaching step S4 can be performed before the ejection step S6 of ejecting the container 4 from the cavity 3 of the mold for blow molding 2, which allows for preventing the content liquid from spilling out of the container 4 in the ejection step S6.

It is to be noted that, in this embodiment, a decoration step S7 may be added. In the decoration step S7, a label bearing characters and designs, for example, is inserted from top, bottom or side of the opened mold for blow molding 2. In other words, after a label is inserted into the mold for blow molding 2 at the slide position 6, the mold for blow molding 2 is displaced to the position 5 at which the liquid blow step S2 is performed (mold return step S5), and thus a label can be adhered to the outer surface of the container 4 after blow molding through the preform feed step S1 and the liquid blow step S2. As a result of this, a process of adhering a label to the outer surface of a container after the container is ejected from the mold for blow molding 2 is no more necessary, and a work for decoration can be simplified. It is to be noted that, in this case, preferably, after the cap attaching step S4 in FIG. 2, the mold is opened at the slide position 6 and the ejection step S6 is performed. Further, as the decoration step S7, a label is inserted into the cavity 3 of the mold 2 from which the container 4 is ejected, after that the mold return step S5 is performed, and each step is repeated again from the preform feed step S1. When the method is configured in the above described manner, it is no longer necessary to perform the mold slide step S3 and the mold return step S5 twice for each in one manufacturing cycle, and thus the manufacturing efficiency can be increased. It is to be noted that, as the decoration step S7, for example, printing and transfer capable of being performed in the mold 2 can be performed.

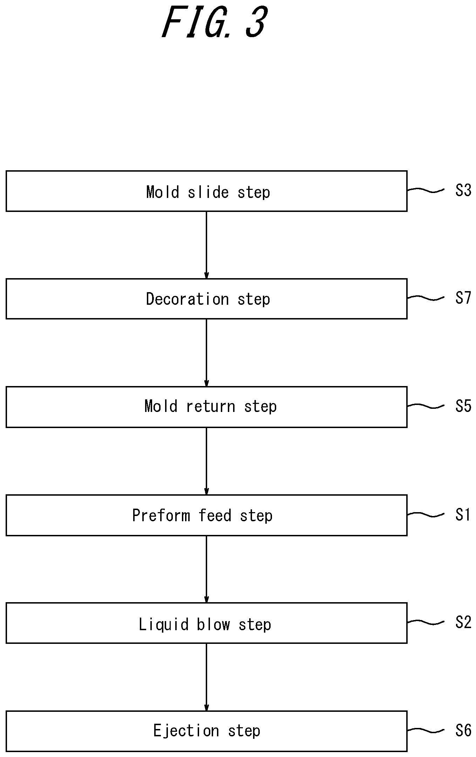

Another embodiment of this disclosure will be described below. In the above described embodiment, the mold slide step S3 is performed after the preform feed step S1 and the liquid blow step S2, and the cap attaching step S4 is performed. However, in this embodiment, the mold slide step S3 is provided before the preform feed step S1, and a label is disposed in advance in the cavity 3 of the mold for blow molding 2, and a cap is attached after the ejection step S6. In other words, as illustrated in FIG. 3, first, the mold slide step S3 is performed, and after that, as the decoration step S7, a label is disposed in the cavity 3 of the mold for blow molding 2 located at the slide position 6. After that, the mold return step S5 is performed to return the mold for blow molding 2 to its original position (the position 5 at which the liquid blow step S2 is performed). Then, in the preform feed step S1, the preform 1 is fed to the inside of the label disposed in advance in the cavity 3 and is clamped. After that the liquid blow step S2 is performed. In this case, when the preform 1 is expanded and deformed in the liquid blow step S2, the label is disposed in close adherence to the outer periphery thereof. After the liquid blow step S2, the container 4 is ejected in the ejection step S6, and after that a cap is attached.

It is to be noted that, the mold slide step S3 is performed again after the liquid blow step S2 and before the ejection step S6 such that the ejection step S6 is performed with the mold for blow molding 2 disposed at the slide position 6.

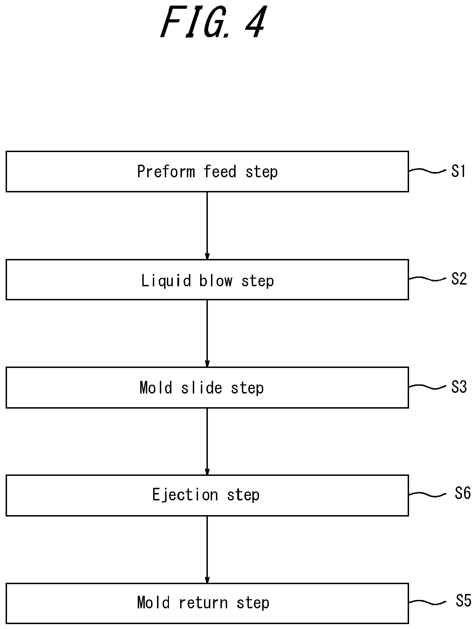

FIG. 4 illustrates still another embodiment, in which the decoration step and the cap attaching step or the like are performed after the ejection step S6. In this embodiment, the mold slide step S3 is performed after the preform feed step S1 and the liquid blow step S2, the ejection step S6 is performed at the slide position 6, and after that the mold return step S5 is performed. In this manner, when the ejection step S6 is performed at the slide position 6 where a nozzle unit or the like is not overlapped thereon, a gripper of a transfer device of the container 4 can be easily inserted from the top of the mold for blow molding 2. In other words, in the ejection step S6, limitation of the ejecting direction and the ejecting method of the container 4 by the nozzle unit or the like can be prevented. It is to be noted that, when the decoration step is performed after the container 4 is ejected from the mold for blow molding 2 as with this embodiment, in addition to the decoration method using a shrink label and a roller label never before possible in a mold, a decoration method such as a printing never before possible will be possible.

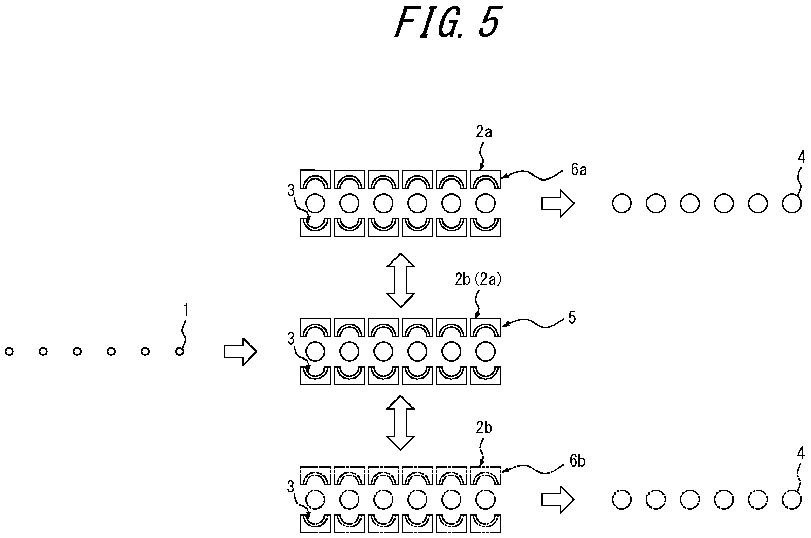

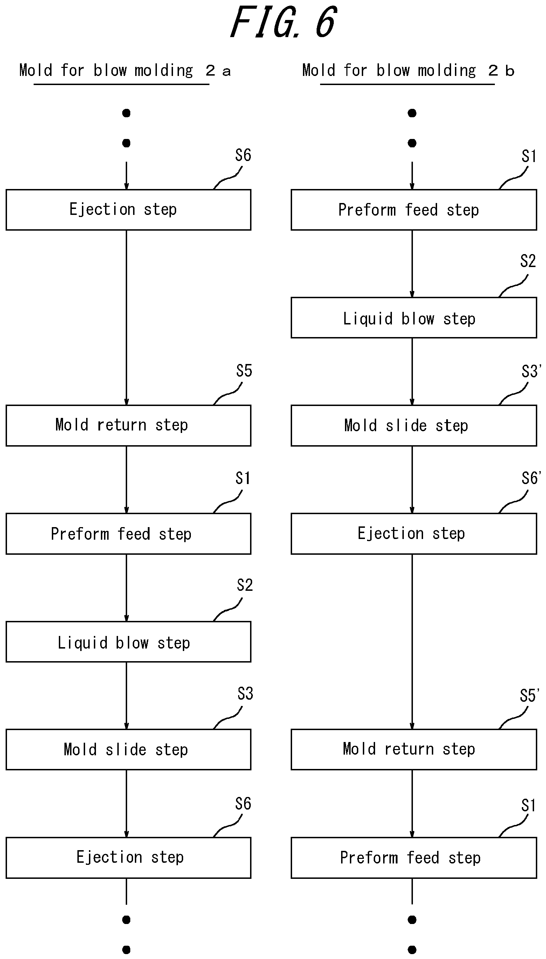

FIG. 5 is a schematic planar view for illustrating a container manufacturing method according to yet another embodiment of this disclosure, and FIG. 6 is a diagram illustrating an order of each step of the container manufacturing method. In this embodiment, as illustrated in FIG. 5, two molds for blow molding 2a and 2b configured to be slidable to the slide positions 6a and 6b different from each other are alternately used to perform the liquid blow step S2. The position 5 at which the liquid blow step S2 is performed is located on a transfer path of the preform 1, for example, and the two molds for blow molding 2a and 2b are configured to be slidable to the slide positions 6a and 6b, respectively, such that the position 5 at which the liquid blow step S2 is performed is located between them.

As illustrated in FIG. 5 with a solid line, while one mold for blow molding 2a of the two molds for blow molding 2a and 2b is located at the first slide position 6a, the preform feed step S1 and the liquid blow step S2 are performed by using the other mold for blow molding 2b located at the position 5. Further, as illustrated in FIG. 5 with a two-dot chain line, while the other mold for blow molding 2b is located at the second slide position 6b, the preform feed step S1 and the liquid blow step S2 are performed by using the one mold for blow molding 2a located at the position 5. It is to be noted that, as illustrated in FIG. 6, each of the molds for blow molding 2a and 2b can continuously manufacture the container 4 by repeating in order of the preform feed step S1, the liquid blow step S2, the mold slide step S3 (S3'), the ejection step S6 (S6') and the mold return step S5 (S5').

In this embodiment, the preform feed step S1 is performed at the position 5 at which the liquid blow step S2 is performed, and the ejection step S6 (S6') of the container 4 is performed at respective slide positions 6a and 6b. It is to be noted that, the above described decoration step S7 and cap attaching step S4 may be performed at respective slide positions 6a and 6b. Further, the preform feed step S1 and the ejection step S6 (S6') may be performed at respective slide positions 6a and 6b, or the preform feed step S1 may be performed at respective slide positions 6a and 6b, and the ejection step S6 (S6') may be performed at the position 5 at which the liquid blow step S2 is performed.

As described above, in this embodiment, the liquid blow step S2 is performed by alternately using the two molds for blow molding 2a and 2b, which allows, while one mold for blow molding 2a of the two performs the ejection step S6 or the like at the slide position 6a, the liquid blow step S2 can be performed by using the other mold for blow molding 2b. Thus the manufacturing efficiency of the container 4 can be increased.

Further, in this embodiment, one transfer device is used for the preform 1. Thus, compared with the case where a transfer device of the preform 1 is provided for each of the two molds for blow molding 2a and 2b, the overall manufacturing device cost can be reduced.

Further, in this embodiment, in terms of further increasing the manufacturing efficiency of the container 4, as illustrated in FIG. 6, preferably, the mold slide step S3 of one mold for blow molding 2a and the mold return step S5' of the other mold for blow molding 2b are performed simultaneously. In the same manner, preferably, the mold return step S5 of one mold for blow molding 2a and the mold slide step S3' of the other mold for blow molding 2b are performed simultaneously.

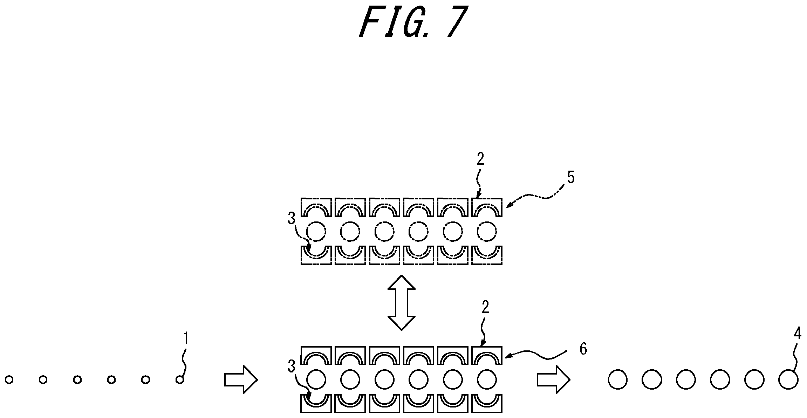

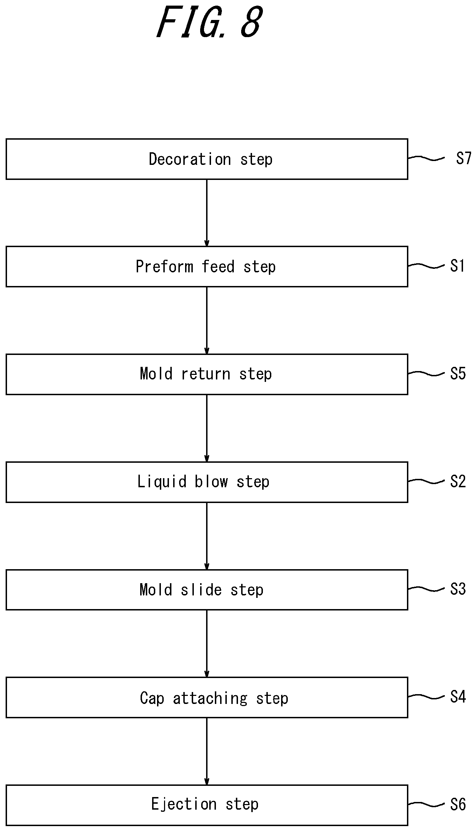

FIG. 7 is a schematic planar view for illustrating a container manufacturing method according to further embodiment of this disclosure and FIG. 8 is a diagram illustrating an order of each step of the container manufacturing method according to the embodiment. In this embodiment, the preform feed step S1 and the ejection step S6 are performed with the mold for blow molding 2 located at the slide position 6. More specifically, as illustrated in FIG. 8, as the decoration step S7, a label is inserted into the cavity 3 with the mold for blow molding 2 located at the slide position 6, and subsequently the preform feed step S1 is performed. Then, the mold return step S5 is performed, in which the mold for blow molding 2 is displaced from the slide position 6 to the position 5 at which the liquid blow step S2 is performed. After the liquid blow step S2, the mold for blow molding 2 is slid to the slide position 6 in the mold slide step S3, and the cap attaching step S4 is performed at the slide position 6. Then the ejection step S6 is performed at the end. It is to be noted that the decoration step S7 is not performed, and decoration may be performed after the ejection step S6.

It is to be noted that, in the container manufacturing method illustrated in FIG. 8, after the liquid blow step S2, the ejection step S6 may be performed at the position 5 to eject a container from the mold 2, and a cap may be attached to the container. In this case, the mold slide step S3 is performed after the ejection step S6 to slide the mold for blow molding 2 from the position 5 to the slide position 6, and each step is performed again starting from the decoration step S7 (or the preform feed step S1).

For example, in the above described embodiments, the mold for blow molding 2 is provided with six cavities 3 disposed in series. However, the number and the arrangement of the cavity 3 may be optionally set, and the mold for blow molding 2 may have at least one cavity 3. Further, the sliding direction of the mold for blow molding 2 is not limited to the direction orthogonal to the transfer direction of the preform 1, and it may be optionally set such as a serial direction (linear direction) or the like.

### REFERENCE SIGNS LIST

- 1: Preform
- 2: Mold for blow molding
- 3: Cavity
- 4: Container
- 5: Position at which a liquid blow step is performed
- 6: Sliding position
- 6a: First sliding position
- 6b: Second sliding position
- S1: Preform feed step
- S2: Liquid blow step
- S3: Mold slide step
- S4: Cap attaching step
- S5: Mold return step
- S6: Ejection step
- S7: Decoration step

## Claims

1. A container manufacturing method, comprising:
a preform feed step (S1) of feeding a preform (1) formed into a bottomed tubular shape by a resin material into a cavity (3) of a batch-type mold (2) for blow molding;
a liquid blow step (S2) of filling a pressurized liquid into the preform (1) disposed in the cavity (3) to perform blow molding; and
an ejection step (S6) of ejecting a container (4) after blow molding from the cavity (3), wherein
the method further comprises a mold slide step (S3) of sliding the mold (2) for blow molding to a slide position (6) that is different from a position (5) of the mold (2) for blow molding in the liquid blow step (S2), **characterized by** that
the method includes at least one of the following features
- a decoration step (S7) of applying a decoration to an outer surface of the container (4) with the mold (2) for blow molding located at the slide position (6),
- a cap attaching step (S4) of attaching a cap to a mouth of the container (4) with the mold (2) for blow molding located at the slide position (6), and
- the ejection step (S6) being performed with the mold (2) for blow molding located at the slide position (6).

2. The container manufacturing method according to claim 1, wherein the mold (2) for blow molding has a plurality of the cavities (3) disposed in series.

3. The container manufacturing method according to claim 1 or claim 2, wherein a slide direction of the mold (2) for blow molding in the mold slide step (S3) is orthogonal to a transfer direction of the preform (1) in the preform feed step (S1).

4. The container manufacturing method according to any one of claims 1 to 3, wherein the slide direction of the mold (2) for blow molding in the mold slide step (S3) is orthogonal to a transfer direction of the preform (1) after blow molding in the ejection step (S6).

5. The container manufacturing method according to any one of claims 1 to 4, wherein in the container manufacturing method of performing the liquid blow step (S2) by alternately using two of the molds (2) for blow molding,
while one of the molds (2) for blow molding is located at a first slide position (6), the other mold (2) for blow molding performs the liquid blow step (S2); and
while the other mold (2) for blow molding is located at a second slide position (6), the one of the molds (2) for blow molding performs the liquid blow step (S2).

## Patentansprüche

1. Ein Verfahren zur Herstellung von Behältern, das Folgendes beinhaltet:
einen Vorformzufuhrschritt (S1) des Zuführens einer Vorform (1), die aus einem Harzmaterial zu einer mit Boden versehenen, rohrförmigen Gestalt gebildet ist, in einen Hohlraum (3) einer Form (2) zur Blasformung vom Typ Chargenbetrieb;
einen Flüssigkeitsblasschritt (S2) des Füllens einer druckbeaufschlagten Flüssigkeit in die Vorform (1), die in dem Hohlraum (3) angeordnet ist, um die Blasformung durchzuführen; und
einen Ausstoßschritt (S6) des Ausstoßens eines Behälters (4) nach der Blasformung aus dem Hohlraum (3), wobei
das Verfahren ferner einen Formschiebeschritt (S3) zum Schieben der Form (2) zur Blasformung in eine Schiebeposition (6) beinhaltet, die sich von einer Position (5) der Form (2) zur Blasformung in dem Flüssigkeitsblasschritt (S2) unterscheidet,
**dadurch gekennzeichnet, dass**
das Verfahren mindestens eines der folgenden Merkmale umfasst:
- einen Dekorationsschritt (S7) des Aufbringens einer Dekoration auf einer äußeren Oberfläche des Behälters (4), während sich die Form (2) zur Blasformung an der Schiebeposition (6) befindet,
- einen Kappenanbringungsschritt (S4) des Aufbringens einer Kappe an einer Mündung des Behälters (4), während sich die Form (2) zur Blasformung an der Schiebeposition (6) befindet, und
- wobei der Ausstoßschritt (S6) durchgeführt wird, während sich die Form (2) zur Blasformung an der Schiebeposition (6) befindet.

2. Verfahren zur Herstellung von Behältern gemäß Anspruch 1,
wobei die Form (2) zur Blasformung eine Vielzahl der Hohlräume (3) in Reihe angeordnet aufweist.

3. Verfahren zur Herstellung von Behältern gemäß Anspruch 1 oder Anspruch 2, wobei eine Schieberichtung der Form (2) zur Blasformung in dem Formschiebeschritt (S3) rechtwinklig zu einer Transferrichtung der Vorform (1) in dem Vorformzufuhrschritt (S1) ist.

4. Verfahren zur Herstellung von Behältern gemäß einem der Ansprüche 1 bis 3, wobei die Schieberichtung der Form (2) zur Blasformung in dem Formschiebeschritt (S3) rechtwinklig zu einer Transferrichtung der Vorform (1) nach der Blasformung in dem Ausstoßschritt (S6) ist.

5. Verfahren zur Herstellung von Behältern gemäß einem der Ansprüche 1 bis 4, wobei in dem Verfahren zur Herstellung von Behältern, bei dem der Flüssigkeitsblasschritt (S2) durch das abwechselnde Verwenden von zwei der Formen (2) zur Blasformung durchgeführt wird,
während sich eine der Formen (2) zur Blasformung an einer ersten Schiebeposition (6) befindet, die andere Form (2) zur Blasformung den Flüssigkeitsblasschritt (S2) durchführt; und
während sich die andere Form (2) zur Blasformung an einer zweiten Schiebeposition (6) befindet, die eine der Formen (2) zur Blasformung den Flüssigkeitsblasschritt (S2) durchführt.

## Revendications

1. Un procédé de fabrication de récipient, comprenant :
une étape d'amenée de préforme (S1) consistant à amener une préforme (1) formée en une conformation tubulaire présentant un fond par un matériau à base de résine dans une cavité (3) d'un moule de type par charges (2) pour moulage par soufflage ;
une étape de soufflage de liquide (S2) consistant à remplir d'un liquide sous pression la préforme (1) disposée dans la cavité (3) afin d'effectuer un moulage par soufflage ; et
une étape d'éjection (S6) consistant à éjecter un récipient (4) de la cavité (3) après moulage par soufflage,
le procédé comprenant en outre une étape de glissement de moule (S3) consistant à glisser le moule (2) pour moulage par soufflage jusqu'à une position de glissement (6) qui est différente d'une position (5) du moule (2) pour moulage par soufflage à l'étape de soufflage de liquide (S2), **caractérisé par le fait que**
le procédé inclut au moins une des caractéristiques suivantes
- une étape de décoration (S7) consistant à appliquer une décoration sur une surface externe du récipient (4), le moule (2) pour moulage par soufflage étant situé au niveau de la position de glissement (6),
- une étape de fixation de couvercle (S4) consistant à fixer un couvercle sur une embouchure du récipient (4), le moule (2) pour moulage par soufflage étant situé au niveau de la position de glissement (6), et
- l'étape d'éjection (S6) étant réalisée avec le moule (2) pour moulage par soufflage situé au niveau de la position de glissement (6).

2. Le procédé de fabrication de récipient selon la revendication 1, dans lequel le moule (2) pour moulage par soufflage a une pluralité des cavités (3) disposées en série.

3. Le procédé de fabrication de récipient selon la revendication 1 ou la revendication 2, dans lequel une direction de glissement du moule (2) pour moulage par soufflage à l'étape de glissement de moule (S3) est orthogonale à une direction de transfert de la préforme (1) à l'étape d'amenée de préforme (S1).

4. Le procédé de fabrication de récipient selon n'importe laquelle des revendications 1 à 3, dans lequel la direction de glissement du moule (2) pour moulage par soufflage à l'étape de glissement de moule (S3) est orthogonale à une direction de transfert de la préforme (1) après moulage par soufflage à l'étape d'éjection (S6).

5. Le procédé de fabrication de récipient selon n'importe laquelle des revendications 1 à 4, dans lequel, dans le procédé de fabrication de récipient consistant à effectuer l'étape de soufflage de liquide (S2) en utilisant en alternance deux des moules (2) pour moulage par soufflage,
tandis qu'un moule parmi les moules (2) pour moulage par soufflage est situé au niveau d'une première position de glissement (6), l'autre moule (2) pour moulage par soufflage effectue l'étape de soufflage de liquide (S2) ; et
tandis que l'autre moule (2) pour moulage par soufflage est situé au niveau d'une deuxième position de glissement (6), cet un moule parmi les moules (2) pour moulage par soufflage effectue l'étape de soufflage de liquide (S2).
